# EUROPEAN PATENT SPECIFICATION

(11) **EP 3 065 149 B1**
(45) Date of publication and mention of the grant of the patent: **20.05.2020**
(21) Application number: 14858374.3
(22) Date of filing: 30.10.2014
(51) Int. Cl.: H01F 1/37, H01F 38/14, H01F 41/02

(54) **SOFT MAGNETIC FERRITE RESIN COMPOSITION, SOFT MAGNETIC FERRITE RESIN COMPOSITION MOLDED BODY, AND POWER TRANSMISSION DEVICE FOR NON-CONTACT POWER SUPPLY SYSTEM**
WEICHMAGNETISCHE FERRITHARZZUSAMMENSETZUNG, FORMKÖRPER AUS WEICHMAGNETISCHER FERRITHARZZUSAMMENSETZUNG UND ENERGIEÜBERTRAGUNGSVORRICHTUNG FÜR EIN KONTAKTLOSES ENERGIEVERSORGUNGSSYSTEM
COMPOSITION DE RÉSINE ET FERRITE MAGNÉTIQUE DOUCE, CORPS MOULÉ EN COMPOSITION DE RÉSINE ET FERRITE MAGNÉTIQUE DOUCE, ET DISPOSITIF DE TRANSMISSION D'ÉNERGIE POUR SYSTÈME D'ALIMENTATION ÉLECTRIQUE SANS CONTACT

(30) Priority: 01.11.2013 JP 2013228626
(43) Date of publication of application: 07.09.2016
(73) Proprietor: Toda Kogyo Corporation, Hiroshima 732-0828 (JP)
(72) Inventor: NISHIMOTO, Kazushi, Otake-shi Hiroshima 739-0652 (JP); OKANO, Yoji, Otake-shi Hiroshima 739-0652 (JP); SAKURAI, Hiromitsu, Otake-shi Hiroshima 739-0652 (JP); YAMAMOTO, Kazumi, Otake-shi Hiroshima 739-0652 (JP); DOTE, Tomohiro, Otake-shi Hiroshima 739-0652 (JP); NISHIO, Yasushi, Otake-shi Hiroshima 739-0652 (JP); FUJII, Yasuhiko, Otake-shi Hiroshima 739-0652 (JP)
(74) Representative: Puschmann Borchert Bardehle Patentanwälte Partnerschaft mbB
(86) International application number: PCT/JP2014/078905
(87) International publication number: WO 2015/064694

(56) References cited:
- EP-A1- 0 986 073
- WO-A1-2011/077601
- JP-A- 2002 246 224
- JP-A- 2003 234 206
- JP-A- 2005 104 785
- JP-A- 2009 295 985
- JP-A- 2010 114 407
- JP-A- 2010 283 263
- JP-A- 2011 023 673
- JP-A- 2011 216 745
- JP-A- 2012 151 179

## Description

The present invention relates to a power transmission device for a non-contact power feeder system such as mobile phones.

In recent years, in mobile devices such as mobile phones, in order to improve convenience of users upon charging and further prevent occurrence of electric shock owing to water leakage, etc., there has been proposed a system for charging the devices in a non-contact condition without using any wires or cables. In this system, there is used a power transmission device comprising a magnetic material and a coil attached to the magnetic material or located near the magnetic material in which electric power is transmitted between a feeding coil and a receiving coil disposed opposite to each other by electromagnetic induction effect of A.C. magnetic field, to thereby conduct charging of the mobile devices.

In the above system, it has been required to further efficiently transmit high electric power, reduce a size of the devices, and enhance rigidity of the devices, and there are disclosed the technology for controlling a magnetic permeability and an electric resistivity of a magnetic material (Patent Literatures 1 and 2), and the technology for conducting heat treatment after high-pressure pressing (Patent Literature 3).

### The state of the art is formed by the following non-literature:

Patent Literature 1: Japanese Patent Application Laid-Open (KOKAI) No. 11-176676
Patent Literature 2: Japanese Patent Application Laid-Open (KOKAI) No. 8-175233
Patent Literature 3: Japanese Patent Application Laid-Open (KOKAI) No. 2008-207365
Patent Literature 4: European Patent Application No. 0986073
Patent Literature 5: Japanese Patent Application No. 2002-246224

In Patent Literature 1, there is described a small-size non-contact transmission device using a ferrite core having high electric resistance, saturation magnetic flux density and magnetic permeability as the magnetic material. However, the ferrite core as a ceramic material is less bearable against impact shock, and therefore tends to suffer from fracture when exposed to impact shock such as shock upon dropping.

In Patent Literature 2, there has been proposed a system using a mixture of ferrite or permalloy with a resin. However, the performance of the system tends to vary depending upon properties of the ferrite or permalloy to be mixed, and no electromagnetic characteristics such as efficiency are described in Patent Literature 2.

In Patent Literature 3, there has been proposed a magnetic shield sheet having high rigidity and magnetic shielding performance which is obtained by subjecting Mn-Zn ferrite, iron-based magnetic particles, nickel-based magnetic particles and a resin to high-pressure pressing. However, because of containing the metal-based magnetic particle, the electric resistance is low and the efficiency thereof is reduced by the eddy-current loss.

In Patent Literature 4, there has been proposed a mixture of soft magnetic ferrite particles and a thermoplastic resin selected from nylon 6, nylon 66, nylon 11, nylon 12, polyethylene sulfide or polyolefins. The mixture is used for manufacturing coil cores of an rotary transformer used as airbag connector.

In Patent Literature 5, there has been proposed a flexible soft magnetic ferrite material for electromagnetic shielding. The material comprises soft magnetic ferrite powders as filler and a binding material. The binding material contains a composition of a styrene-isoprene block polymer or a styrene-ethylene/butylene-styrene block copolymer and an ethylene-propylene copolymer and a propylene homopolymer or propylene-ethylene copolymer, and propylene-ethylene copolymer or ethylene-propylene-diene copolymer.

In consequence, an object of the present invention is to provide a power transmission device for a non-contact power feeder system which has high power transmission efficiency and high impact resistance.

The above object or technical task can be achieved by the following aspects of the present invention.

That is, according to the present invention, there is provided a soft magnetic ferrite resin composition molded product comprising a filler and a binder, which filler comprises soft magnetic ferrite particles having an average particle diameter of 5 to 35 µm, which binder comprises at least one material selected from the group consisting of a thermoplastic resin and a soft polyolefin resin, and which soft magnetic ferrite resin composition molded product has a molding density of 3.2 to 4.7 g/cm³ and a magnetic permeability of 5 to 15 wherein the soft magnetic ferrite particles have a compressed density of 2.5 to 5 g/cm³ and a specific surface area of 0.3 to 4 m²/g (Invention 1).

Also, according to the present invention, there is provided the soft magnetic ferrite resin composition molded product as defined in the Invention 1, wherein an inductance of the soft magnetic ferrite resin composition molded product is 3.5 to 6 µH (Invention 2).

Also, according to the present invention, there is provided the soft magnetic ferrite resin composition molded product as defined in the Invention 1 or 2, wherein a power transmission efficiency of the soft magnetic ferrite resin composition molded product is 55 to 80% (Invention 3).

Also, according to the present invention, there is provided the soft magnetic ferrite resin composition molded product as defined in anyone of the Inventions 1 to 3, wherein the filler comprises spinel-type ferrite (Invention 4).

Also, according to the present invention, there is provided the soft magnetic ferrite resin composition molded product as defined in any one of the Inventions 1 to 4, wherein the binder comprises at least one thermoplastic resin selected from the group consisting of nylon 6, nylon 12, nylon 612, nylon 9T, polyphenylene sulfide, an ethylene-ethyl acrylate copolymer, a styrene-isoprene-styrene block copolymer and a styrene-ethylene/butylene-styrene block copolymer, or at least one thermoplastic resin selected from the group consisting of a styrene-isoprene-styrene block copolymer and a styrene-ethylene/butylene-styrene block copolymer and a soft polyolefin resin constituted of an ethylene-butylene copolymer (Invention 5).

Also, according to the present invention, there is provided the soft magnetic ferrite resin composition molded product as defined in any one of the Inventions 1 to 5, wherein a content of the soft magnetic ferrite particles in the soft magnetic ferrite resin composition molded product is 88 to 97% by weight (Invention 6).

In addition, according to the present invention, there is provided a power transmission device comprising anon-contact power feeder system comprising the soft magnetic ferrite resin composition molded product as defined in any one of the Inventions 1 to 6 and a coil attached to the soft magnetic ferrite resin composition molded product (Invention 7).

Furthermore, according to the present invention, there is provided a non-contact power feeding method comprising the power transmission device comprising a non-contact power feeder system as defined in the invention 7 (lnvention 8).

The power transmission device for a non-contact power feeder system comprising the soft magnetic ferrite resin composition molded product of the present invention and a coil attached thereto or located near thereto is excellent in impact resistance and therefore free from fracture even when exposed to impact shock such as shock upon dropping. In addition, since properties of the filler used therein are controlled to the specific range, the power transmission device is excellent in electromagnetic characteristics such as power transmission efficiency.

The construction of the present invention is described in detail below.

The soft magnetic ferrite resin composition molded product according to the present invention is a molded product of a soft magnetic ferrite resin composition that comprises a filler comprising soft magnetic ferrite particles, and a binder comprising at least one material selected from the group consisting of a thermoplastic resin and a soft polyolefin resin.

The soft magnetic ferrite resin composition molded product according to the present invention has a molding density of 3.2 to 4.7 g/cm³. When the molding density of the soft magnetic ferrite resin composition molded product is less than 3,2 g/cm³, the resulting molded product tends to be deteriorated in inductance or power transmission efficiency. The upper limit of the molding density attained in the present invention is 4.7 g/cm³. The molding density of the soft magnetic ferrite resin composition molded product according to the present invention is preferably 3.5 to 4.7 g/cm³.

The soft magnetic ferrite resin composition molded product according to the present invention has a magnetic permeability of 5 to 15. When the magnetic permeability of the soft magnetic ferrite resin composition molded product is less than 5, the resulting molded product tends to be deteriorated in inductance or power transmission efficiency. The upper limit of the magnetic permeability attained in the present invention is 15. The magnetic permeability of the soft magnetic ferrite resin composition molded product according to the present invention is preferably 6 to 15, and more preferably 6 to 14.

The inductance of the soft magnetic ferrite resin composition molded product according to the present invention is preferably 3.5 to 6 µH. When the inductance of the soft magnetic ferrite resin composition molded product is less than 3.5 µH, the resulting molded product tends to be deteriorated in power transmission efficiency. The upper limit of the inductance attained in the present invention is 6 µH. The inductance of the soft magnetic ferrite resin composition molded product according to the present invention is more preferably 4 to 6 µH, and even more preferably 4 to 5.5 µH.

The power transmission efficiency of the soft magnetic ferrite resin composition molded product according to the present invention is preferably 55 to 80%. When the power transmission efficiency of the soft magnetic ferrite resin composition molded product is less than 55%, the resulting molded product tends to have a large loss and suffer from considerably severe heat generation. The upper limit of the power transmission efficiency attained in the present invention is 80%. The power transmission efficiency of the soft magnetic ferrite resin composition molded product according to the present invention is more preferably 60 to 80%, and even more preferably 60 to 75%.

The soft magnetic ferrite particles used in the present invention are preferably spinel-type ferrite particles having soft magnetic properties. Examples of the spinel-type ferrite particles include particles of Mn-Zn-based ferrite, Ni-Zn-based ferrite, Ni-Zn-Cu-based ferrite, Mg-Zn-based ferrite, Mg-Zn-Cu-based ferrite, Li-Zn-based ferrite, Li-Zn-Cu-based ferrite and the like,

The soft magnetic ferrite particles used in the present invention have an average particle diameter of 5 to 35 µm. When the average particle diameter of the soft magnetic ferrite particles is less than 5 µm, the ferrite particles tend to be hardly packed with high density, and the resulting molded product tends to be deteriorated in inductance and power transmission efficiency. When the average particle diameter of the soft magnetic ferrite particles is more than 35 µm, the resulting molded product tends to be deteriorated in surface smoothness. The average particle diameter of the soft magnetic ferrite particles is preferably 8 to 25 µm.

The soft magnetic ferrite particles used in the present invention have a compressed density of 2.5 to 5 g/cm³. When the compressed density of the soft magnetic ferrite particles is less than 2.5 g/cm³, the ferrite particles tend to be hardly packed with high density, and the resulting molded product tends to be deteriorated in inductance and power transmission efficiency. In the production process of the present invention, the soft magnetic ferrite particles having a compressed density of not more than 5 g/cm³ are obtained. The compressed density of the soft magnetic ferrite particles is preferably 3 to 5 g/cm³, and even more preferably 3 to 4.5 g/cm³.

The soft magnetic ferrite particles used in the present invention have a specific surface area of 0.3 to 4 m²/g. When the specific surface area of the soft magnetic ferrite particles is more than 4 m²/g, the ferrite particles tend to be hardly packed with high density, and the resulting molded product tends to be deteriorated in inductance and power transmission efficiency. In the production process of the present invention, the soft magnetic ferrite particles having a specific surface area of not less than 0.3 m²/g are obtained. The specific surface area of the soft magnetic ferrite particles is preferably 0.3 to 3 m²/g.

The content of the soft magnetic ferrite particles in the soft magnetic ferrite resin composition of the present invention is preferably 88 to 97% by weight. When the content of the the soft magnetic ferrite particles in the soft magnetic ferrite resin composition is less than 88% by weight, the resulting molded product tends to be deteriorated in inductance and power transmission efficiency. When the content of the soft magnetic ferrite particles in the soft magnetic ferrite resin composition is more than 97% by weight, the ferrite particles tend to be hardly kneaded with a resin. The content of the soft magnetic ferrite particles in the soft magnetic ferrite resin composition of the present invention is more preferably 89 to 95% by weight.

The thermoplastic resin used in the present invention may be appropriately selected from nylon 6, nylon 12, nylon 612, nylon 9T, polyphenylene sulfide, an ethylene-ethyl acrylate copolymer, a styrene-isoprene-styrene block copolymer and a styrene-ethylene/butylene-styrene block copolymer according to heat resistance, strength, shape, etc., as required for the resulting molded product.

When producing the pellet-shaped soft magnetic ferrite resin composition, the thermoplastic resin used in the present invention is preferably at least one thermoplastic resin selected from the group consisting of nylon 6, nylon 12, nylon 612, nylon 9T, polyphenylene sulfide and an ethylene-ethyl acrylate copolymer. As an example of the process for producing the soft magnetic ferrite resin composition molded product according to the present invention, there may be mentioned a method of injection-molding the above pellet-shaped soft magnetic ferrite resin composition. In this case, the injection pressure used upon the injection-molding is 400 to 1600 kg/cm². When the injection pressure is more than 1600 kg/cm², the pellet-shaped soft magnetic ferrite resin composition tends to be hardly injection-molded. In the production process of the present invention, the lower limit of the injection pressure is 400 kg/cm². The injection pressure used upon injection-molding the pellet-shaped soft magnetic ferrite resin composition is preferably 400 to 1500 kg/cm², and more preferably 500 to 1500 kg/cm².

The soft polyolefin resin used in the present invention is an ethylene-butylene copolymer. If required, two or more ethylene-butylene copolymers that are different in molecular weight, etc., from each other may be used in the form of a mixture thereof.

In the case where the soft magnetic ferrite resin composition molded product according to the present invention is formed into a sheet-like shape, as the binder, there is preferably used a combination of at least one thermoplastic resin selected from the group consisting of a styrene-isoprene-styrene block copolymer and a styrene-ethylenelbutylene-styrene block copolymer, and a soft polyolefin resin constituted of an ethylene-butylene copolymer. When using these resins in combination with each other, it is possible to obtain a soft magnetic ferrite resin composition having excellent flexibility and mechanical strength. The proportion of the thermoplastic resin to the soft polyolefin resin is preferably 1 to 5.

The soft magnetic ferrite resin composition molded product according to the present invention is excellent in impact resistance, and therefore free from fracture even when exposed to impact shock such as shock upon dropping. The soft magnetic ferrite resin composition molded product having a length of 6 cm, a width of 6 cm and a thickness of 2 mm is preferably free from fracture even when dropping the molded product down on a concrete floor from a height of 1 m.

The soft magnetic ferrite resin composition molded product according to the present invention in which at least one resin selected from the group consisting of nylon 6, nylon 612, nylon 9T and polyphenylene sulfide is used as a binder is more excellent in heat resistance and therefore free of thermal deformation under the environmental condition at 170°C.

The size and thickness of the soft magnetic ferrite resin composition molded product according to the present invention may be appropriately determined according to the aimed applications thereof.

Next, the processes of producing the soft magnetic ferrite resin composition and the soft magnetic ferrite resin composition molded product according to the present invention are described.

First, the soft magnetic ferrite particles are produced as follows. That is, a raw material mixture obtained by mixing raw materials such as an oxide, a carbonate, a hydroxide, an oxalate, etc., of respective elements constituting the ferrite at desired compositional ratios, or a precipitate obtained by precipitating the respective elements in an aqueous solution thereof, is calcined in air at a temperature of 700 to 1300°C for 1 to 20 hr, and then the resulting calcined product is pulverized to obtain the soft magnetic ferrite particles. In particular, from the standpoint of environmental protection, there may be reused soft magnetic ferrite particles obtained by pulverizing wastes generated in the course of production of various ferrite cores or ferrite sintered plates.

The soft magnetic ferrite resin composition according to the present invention is produced by mixing the aforementioned soft magnetic ferrite particles and at least one resin selected from the group consisting of nylon 6, nylon 12, nylon 612, nylon 9T, polyphenylene sulfide and an ethylene-ethyl acrylate copolymer at a desired ratio and then kneading the resulting mixture using a kneader at a temperature of 180 to 350°C for a period of 1 min to 2 hr. In particular, from the standpoint of easy handing in subsequent steps, the soft magnetic ferrite resin composition is preferably in the form of pellets. The resulting soft magnetic ferrite resin composition is formed into a desired shape using an injection-molding machine or an extrusion-molding machine to thereby obtain the soft magnetic ferrite resin composition molded product according to the present invention.

The soft magnetic ferrite resin composition according to the present invention is also produced by mixing the aforementioned soft magnetic ferrite particles with at least one thermoplastic resin selected from the group consisting of a styrene-isoprene-styrene block copolymer and a styrene-ethylene/butylene-styrene block copolymer and a soft polyolefin resin constituted of an ethylene-butylene copolymer at a desired ratio and then kneading the resulting mixture using a kneader at a temperature of 150 to 250°C for a period of 1 min to 2 hr. In particular, the above soft magnetic ferrite resin composition is excellent in moldability for obtaining a sheet-shaped molded product. Following the above kneading step, the soft magnetic ferrite resin composition is rolled between rolls and formed into a sheet shape, and then the resulting sheet-shaped material is cut into a desired shape using a metal die, a cutter die or the like, thereby obtaining the soft magnetic ferrite resin composition molded product according to the present invention.

Next, the method for manufacturing the power transmission device for a non-contact power feeder system according to the present invention is described.

The power transmission device for a non-contact power feeder system according to the present invention may be manufactured by attaching a coil having a desired size and number of turns according to the aimed applications thereof onto the soft magnetic ferrite resin composition molded product according to the present invention using an adhesive or the like. The coil may be wound and processed into a desired shape, and attached in parallel onto the molded product so as not to protrude from the molded product.

Next, the non-contact power feeding method using the power transmission device for a non-contact power feeder system according to the present invention is described. The aforementioned power transmission device for a non-contact power feeder system is used as a power-feeding side, whereas a coil disposed above the coil of the power transmission device is used as a power-receiving side. The power-feeding side coil is energized to flow a current therethrough, so that an electric potential is produced on the power-receiving side coil by electromagnetic induction effect to flow a current through the power-receiving side coil. A load is connected to the power-receiving side to conduct charging thereof. The power-receiving side coil may be attached to a ferrite plate, if required. As the ferrite plate, there may be used the soft magnetic ferrite resin composition molded product according to the present invention. The power transmission device for a non-contact power feeder system may be used on either one or both of the power-feeding side and the power-receiving side.

### <Function>

The most important point of the present invention resides in such a point that the power transmission device for a non-contact power feeder system comprising the soft magnetic ferrite resin composition molded product and the coil attached thereto is excellent in impact resistance since the no sintered ferrite core is used in the device. Further, by controlling various properties of the soft magnetic ferrite particles as a filler to specific ranges, the power transmission device is also excellent in power transmission efficiency,

### Examples:

Typical embodiments of the present invention are as follows.

The average particle diameter of the soft magnetic ferrite particles was defined as the value (D₅₀) measured using a particle size distribution meter "HELOS & RODOS" manufactured by Sympatec GmbH.

The compressed density of the soft magnetic ferrite particles was determined as a density of a green compact which was produced by filling 25 g of the particles in a metal mold for molding a cylinder having a diameter of 2.54 cm (1 inch), applying a load of 98 MPa (1 t/cm²) to the particles and then taking the resulting molded product out of the mold.

The specific surface area of the soft magnetic ferrite particles was measured using "Macsorb HM Model 1208" manufactured by Mountech Co., Ltd.

The injection molding pressure of the soft magnetic ferrite resin composition was measured by a pressure gauge mounted to the injection molding machine.

The molding density of the soft magnetic ferrite resin composition molded product was calculated from an outer dimension and a weight of the resulting molded product.

The magnetic permeability of the soft magnetic ferrite resin composition molded product was determined as µ' obtained by measuring a permeability of a ring core having an outer diameter of 14 mm, an inner diameter of 8 mm and a thickness of 2 mm which was prepared from the molded product, at 100 kHz using a precision impedance analyzer "4294A" manufactured by Agilent Technology Co., Ltd.

The inductance of the soft magnetic ferrite resin composition molded product was determined as follows. That is, a coil of 10 turns was attached onto the molded product having a length of 6 cm, a width of 6 cm and a thickness of 2 mm, and the inductance of the resulting molded product was measured at 100 kHz using an LCR meter "IM3523" manufactured by Hioki E.E. Corp,

The power transmission efficiency of the soft magnetic ferrite resin composition molded product was measured by using the power transmission device comprising the soft magnetic ferrite resin composition molded product having a length of 6 cm, a width of 6 cm and a thickness of 2 mm onto which a double wound coil with 10 turns for each winding was attached, as a power-feeding side, and a device comprising an Ni-Zn-Cu-based ferrite plate having a length of 6 cm, a width of 6 cm and a thickness of 0.1 mm onto which a coil of 15 turns was attached, as a power-receiving side.

The impact resistance of the soft magnetic ferrite resin composition molded product was determined by dropping the molded product (having a length of 6 cm, a width of 6 cm and a thickness of 2 mm) down on a concrete floor from a height of 1 m to examine whether or not any fracture occurred therein.

The heat resistance test was carried out by the following method. That is, the soft magnetic ferrite resin composition molded product was formed into a dumbbell-shaped test piece (having a whole length of 175 mm, a whole width of 12.5 mm and a thickness of 3.2 mm), and the resulting test piece was subjected to three-point bending test in which the test piece was exposed to a temperature of 170°C in an oven for 1 hr while loading a weight of 50 g at a center thereof to examine whether or not any thermal deformation occurred therein.

The styrene-isoprene-styrene block copolymer, the styrene-ethylenelbutylene-styrene block copolymer and the ethylene-butylene copolymer used herein were respectively selected from those shown in Table 1.

### Example 1:

Ni-Zn-Cu-based ferrite having an average particle diameter of 15.1 µm, a compressed density of 3.82 g/cm³ and a specific surface area of 1.10 m²/g and nylon 12 were mixed in amounts of 95% by weight and 5% by weight, respectively, and the resulting mixture was kneaded at 200°C for 10 min using a kneader, followed by cutting the obtained kneaded material into pellets. The resulting composition was injection-molded by setting a nozzle temperature of an injection molding machine to 270°C, thereby obtaining a plate-shaped soft magnetic ferrite resin composition molded product having a length of 6 cm, a width of 6 cm and a thickness of 2 mm. In the injection molding, the injection pressure was146 MPa (1493 kg/cm²). The thus obtained soft magnetic ferrite resin composition molded product had a molding density of 4.65 g/cm³, a magnetic permeability of 13.6, an inductance of 5.43 µH and a power transmission efficiency of 74.7%. It was confirmed that the resulting molded product was free from fracture when subjected to dropping test, and therefore excellent in impact resistance.

### Examples 2 to 4:

The soft magnetic ferrite resin composition and the soft magnetic ferrite resin composition molded product were produced by the same method as in Example 1. The production conditions used above as well as various properties of the thus obtained soft magnetic ferrite resin composition and soft magnetic ferrite resin composition molded product are shown in Table 2.

### Example 5:

Ni-Zn-Cu-based ferrite having an average particle diameter of 14.8 µm, a compressed density of 3.79 g/cm³ and a specific surface area of 1.18 m²/g, a resin A and a resin C, among which the latter two are shown in Table 1, were mixed in amounts of 95% by weight, 3% by weight and 2% by weight, respectively, and the resulting mixture was kneaded at 180°C on a twin roll, thereby obtaining a sheet-like soft magnetic ferrite resin composition having a thickness of 2 mm. The resulting composition was cut to obtain a plate-shaped soft magnetic ferrite resin composition molded product having a length of 6 cm, a width of 6 cm and a thickness of 2 mm. The thus obtained soft magnetic ferrite resin composition molded product had a molding density of 4.63 g/cm³, a magnetic permeability of 13.4, an inductance of 5.41 µH and a power transmission efficiency of 74.5%.

### Examples 6 to 8:

The soft magnetic ferrite resin composition and the soft magnetic ferrite resin composition molded product were produced by the same method as in Example 5. The production conditions used above as well as various properties of the thus obtained soft magnetic ferrite resin composition and soft magnetic ferrite resin composition molded product are shown in Table 2.

### Comparative Example 1:

Ni-Zn-Cu-based ferrite having an average particle diameter of 38.9 µm, a compressed density of 5.33 g/cm³ and a specific surface area of 0.25 m²/g and nylon 12 were mixed in amounts of 97.5% by weight and 2.5% by weight, respectively, and the resulting mixture was kneaded at 210°C for 15 min using a kneader, followed by cutting the obtained kneaded material into pellets. Although it was attempted to subject the resulting composition to injection-molding, the composition could not be molded owing to excessively high injection pressure therefor.

### Comparative Example 2:

The soft magnetic ferrite resin composition and the soft magnetic ferrite resin composition molded product were produced by the same method as in Example 1. The production conditions used above as well as various properties of the thus obtained soft magnetic ferrite resin composition and soft magnetic ferrite resin composition molded product are shown in Table 2.

### Comparative Example 3:

The soft magnetic ferrite resin composition and the soft magnetic ferrite resin composition molded product were produced by the same method as in Example 5. The production conditions used above as well as various properties of the thus obtained soft magnetic ferrite resin composition and soft magnetic ferrite resin composition molded product are shown in Table 2.

### Comparative Example 4:

Mn-Zn ferrite particles were sintered at 1300°C to obtain an Mn-Zn ferrite sintered body. The thus obtained Mn-Zn ferrite sintered body had a sintered density of 4.9 g/cm³, a magnetic permeability of 2389, an inductance of 5.84 µH and a power transmission efficiency of 70.3%. The sintered body was broken when subjected to dropping test, and therefore deteriorated in impact resistance.

**Table 1**

| Symbol | Kind of resin | | Product name |
|---|---|---|---|
| A | Thermoplastic resin | Styrene-isoprene-styrene block copolymer | "HYBRA VS-1" (produced by Kuraray Co., Ltd.) |
| B | Thermoplastic resin | Styrene-ethylene/butylene-styrene block copolymer | "KRATON G1657" (produced by Shell Chemicals Corp.) |
| C | Soft polyolefin resin | Ethylene-butylene copolymer | "LUMITAC 54-1" (produced by TOSOH Corp.) |
| D | Soft polyolefin resin | Ethylene-butylene copolymer | "LUMITAC 08L55A" (produced by TOSOH Corp.) |

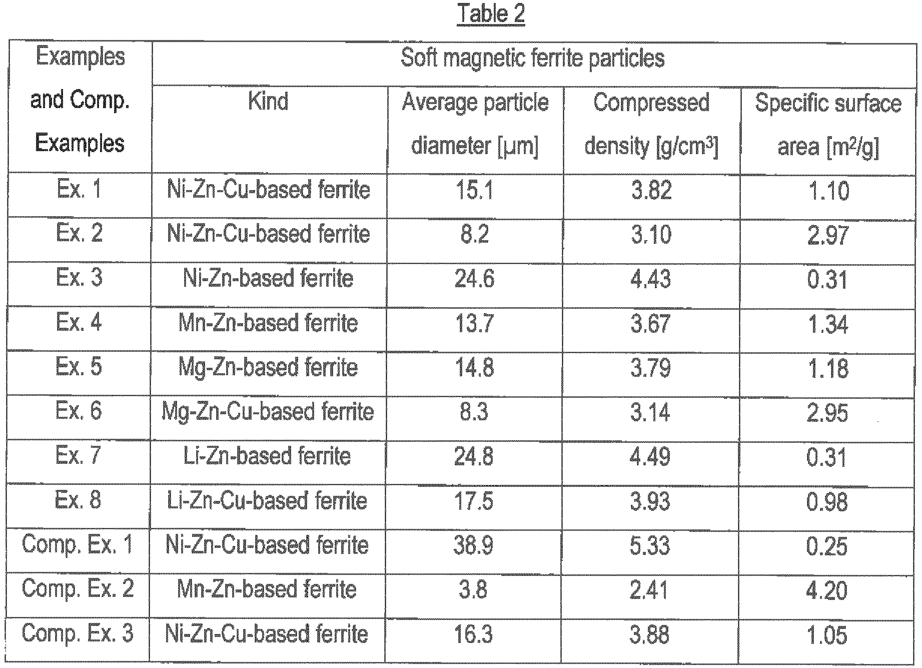

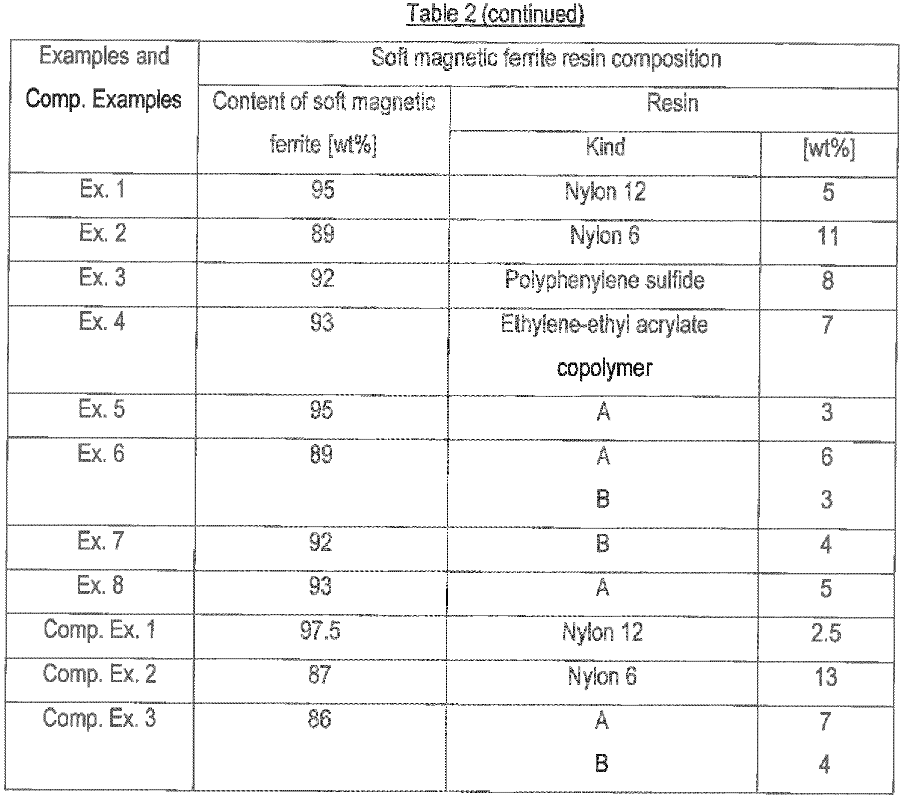

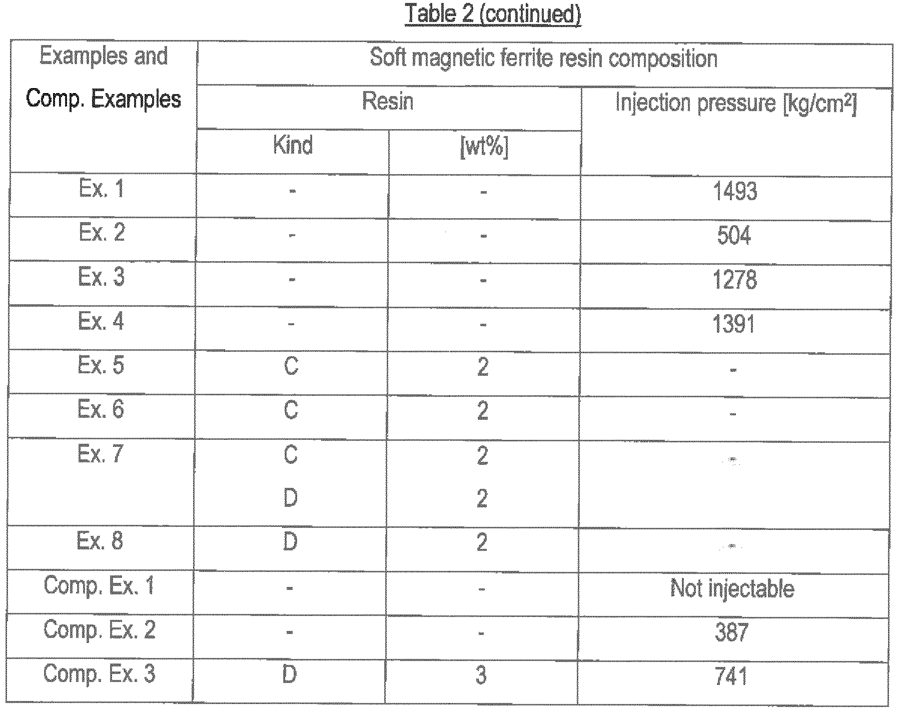

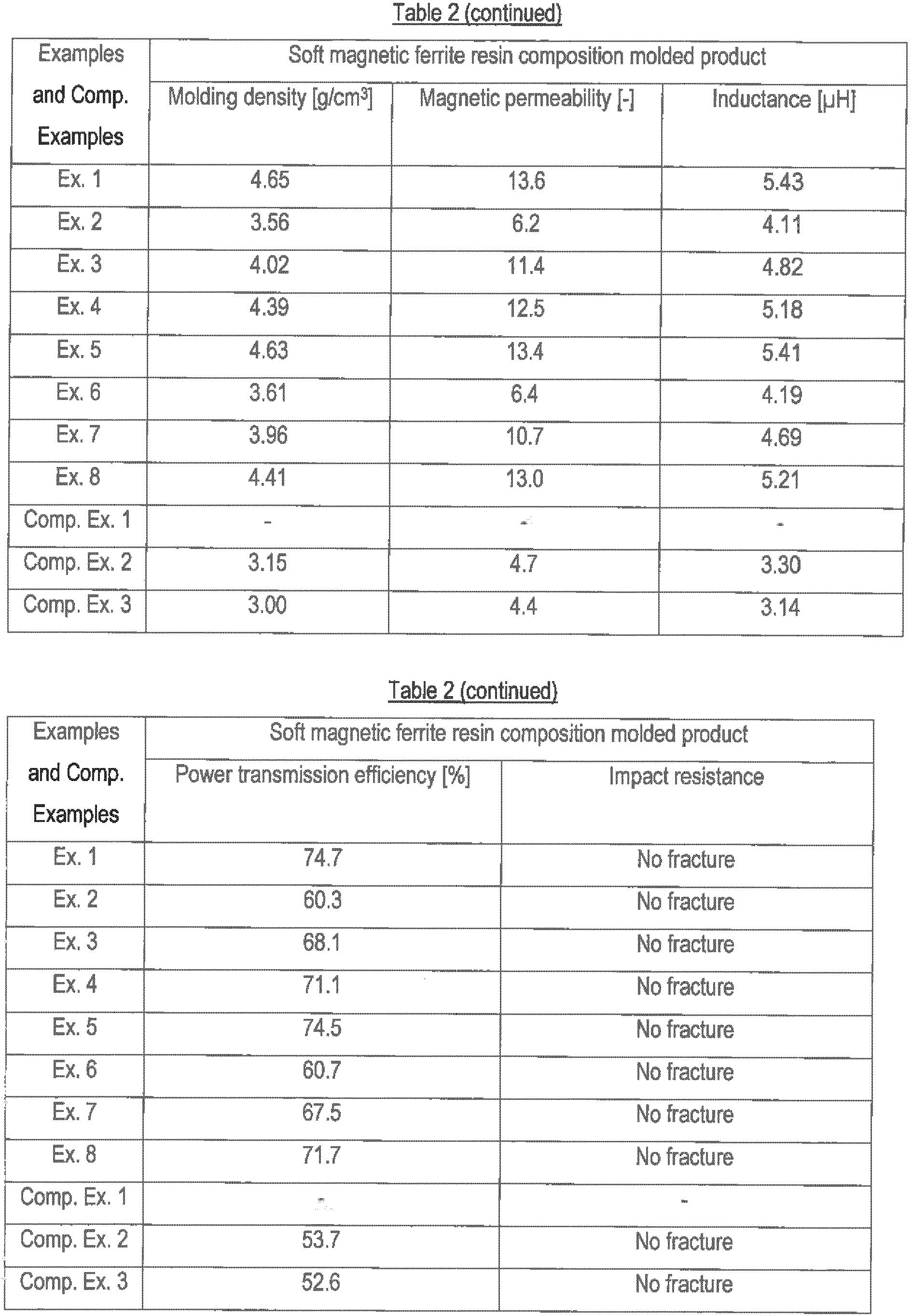

### Example 9:

Ni-Zn-Cu-based ferrite having an average particle diameter of 14,6 µm, a compressed density of 3.77 g/cm³ and a specific surface area of 1.40 m²/g and nylon 612 were mixed in amounts of 94% by weight and 6% by weight, respectively, and the resulting mixture was kneaded at 230°C for 10 min using a kneader, followed by cutting the obtained kneaded material into pellets. The resulting composition was injection-molded by setting a nozzle temperature of an injection molding machine to 300°C, thereby obtaining a plate-shaped soft magnetic ferrite resin composition molded product having a length of 6 cm, a width of 6 cm and a thickness of 2 mm. The thus obtained soft magnetic ferrite resin composition molded product had a molding density of 4.55 g/cm³, a magnetic permeability of 12.3, an inductance of 5.35 µH and a power transmission efficiency of 73.0%. It was confirmed that the resulting molded product was free from fracture when subjected to dropping test, and therefore excellent in impact resistance.

Further, it was also confirmed that in the heat resistance test at 170°C, the resulting molded product was free from thermal decomposition and therefore excellent in heat resistance.

### Examples 10 and 11:

The soft magnetic ferrite resin composition and the soft magnetic ferrite resin composition molded product were produced by the same method as in Example 9. The production conditions used above as well as various properties of the thus obtained soft magnetic ferrite resin composition and soft magnetic ferrite resin composition molded product are shown in Table 3.

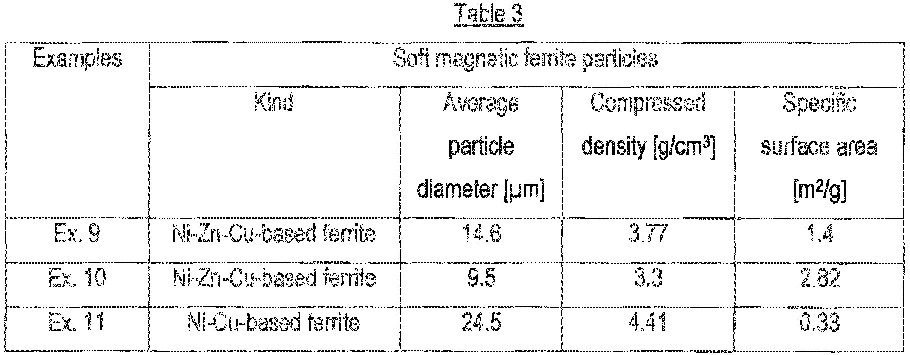

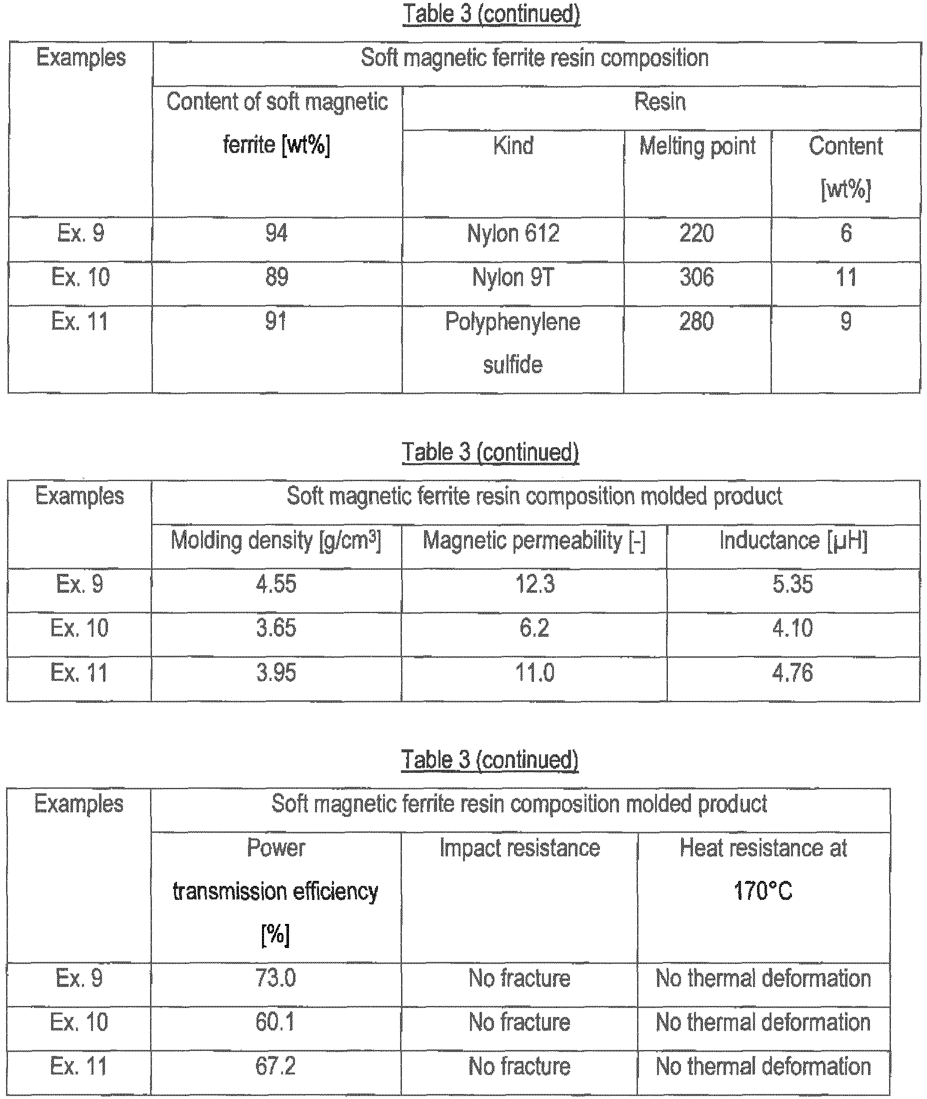

### INDUSTRIAL APPLICABILITY

The power transmission device for a non-contact power feeder system using the soft magnetic ferrite resin composition molded product according to the present invention is excellent in impact resistance and therefore free from fracture even when subjected to impact shock such as shock upon dropping, and further exhibits excellent electromagnetic characteristics such as power transmission efficiency.

## Claims

1. A soft magnetic ferrite resin composition molded product for a power transmission device for a non-contact power feeder system comprising a filler and a binder, which filler comprises soft magnetic ferrite particles having an average particle diameter of 5 to 35 µm, which binder comprises at least one material selected from the group consisting of a thermoplastic resin and a soft polyolefin resin, and which soft magnetic ferrite resin composition molded product has a molding density of 3.2 to 4.7 g/cm³ and a magnetic permeability of 5 to 15, **characterised in that** the soft magnetic ferrite particles have a compressed density of 2.5 to 5 g/cm³ and a specific surface area of 0.3 to 4 m²/g,

2. The soft magnetic ferrite resin composition molded product according to claim 1, wherein an inductance of the soft magnetic ferrite resin composition molded product is 3.5 to 6 µH.

3. The soft magnetic ferrite resin composition molded product according to claim 1 or 2, wherein a power transmission efficiency of the soft magnetic ferrite resin composition molded product is 55 to 80%.

4. The soft magnetic ferrite resin composition molded product according to any one of claims 1 to 3, wherein the filler comprises a spinel-type ferrite.

5. The soft magnetic ferrite resin composition molded product according to any one of claims 1 to 4, wherein the binder comprises at least one thermoplastic resin selected from the group consisting of nylon 6, nylon 12, nylon 612, nylon 9T, polyphenylene sulfide, an ethylene-ethyl acrylate copolymer, a styrene-isoprene-styrene block copolymer and a styrene-ethylene/butylene-styrene block copolymer, or at least one thermoplastic resin selected from the group consisting of a styrene-isoprene-styrene block copolymer and a styrene-ethylene/butylene-styrene block copolymer and a soft polyolefin resin constituted of an ethylene-butylene copolymer.

6. The soft magnetic ferrite resin composition molded product according to any one of claims 1 to 5, wherein a content of the soft magnetic ferrite particles in the soft magnetic ferrite resin composition molded product is 88 to 97% by weight.

7. A power transmission device comprising a non-contact power feeder system comprising a magnetic material and a coil attached to the magnetic material, **characterised in that** the magnetic material is the soft magnetic ferrite resin composition molded product as claimed in any one of claims 1 to 6.

8. A non-contact power feeding method comprising the power transmission device **characterised in that** the non-contact power feeder system as claimed in claim 7 is used.

## Patentansprüche

1. Formteil aus weichmagnetischer Ferritharzzusammensetzung für eine Leistungsübertragungsvorrichtung für ein berührungsloses Leistungszuführungssystem, umfassend einen Füllstoff und ein Bindemittel, wobei der Füllstoff weichmagnetische Ferritteilchen mit einem durchschnittlichen Teilchendurchmesser von 5 bis 35 µm umfasst, wobei das Bindemittel mindestens ein Material umfasst, das aus der Gruppe ausgewählt ist, die aus einem thermoplastischen Harz und einem weichen Polyolefinharz besteht, und wobei das Formteil aus weichmagnetischer Ferritharzzusammensetzung eine Formdichte von 3,2 bis 4,7 g/cm³ und eine magnetische Permeabilität von 5 bis 15 hat, **dadurch gekennzeichnet, dass** die weichmagnetischen Ferritteilchen eine komprimierte Dichte von 2,5 bis 5 g/cm³ und eine spezifische Oberfläche von 0,3 bis 4 m²/g haben.

2. Formteil aus weichmagnetischer Ferritharzzusammensetzung nach Anspruch 1, bei dem eine Induktivität des Formteils aus weichmagnetischer Ferritharzzusammensetzung 3,5 bis 6 µH beträgt.

3. Formteil aus weichmagnetischer Ferritharzzusammensetzung nach Anspruch 1 oder 2, bei dem der Wirkungsgrad der Leistungsübertragung des Formteils aus weichmagnetischer Ferritharzzusammensetzung 55 bis 80% beträgt.

4. Formteil aus weichmagnetischer Ferritharzzusammensetzung nach einem der Ansprüche 1 bis 3, bei dem der Füllstoff einen Ferrit vom Spinell-Typ umfasst.

5. Formteil aus weichmagnetischer Ferritharzzusammensetzung nach einem der Ansprüche 1 bis 4, bei dem das Bindemittel mindestens ein thermoplastisches Harz, ausgewählt aus der Gruppe bestehend aus Nylon 6, Nylon 12, Nylon 612, Nylon 9T, Polyphenylensulfid, einem Ethylen-Ethylacrylat-Copolymer, einem Styrol-Isopren-Styrol-Blockcopolymer und einem Styrol-Ethylen/Butylen-Styrol-Blockcopolymer, oder mindestens ein thermoplastisches Harz, ausgewählt aus der Gruppe bestehend aus einem Styrol-Isopren-Styrol-Blockcopolymer und einem Styrol-Ethylen/Butylen-Styrol-Blockcopolymer und einem weichen Polyolefinharz, das aus einem Ethylen-Butylen-Copolymer besteht, umfasst.

6. Formteil aus weichmagnetischer Ferritharzzusammensetzung nach einem der Ansprüche 1 bis 5, bei dem ein Gehalt der weichmagnetischen Ferritteilchen in dem Formteil aus weichmagnetischer Ferritharzzusammensetzung 88 bis 97 Gew.-% beträgt.

7. Leistungsübertragungsvorrichtung umfassend ein berührungsloses Energiezuführungssystem umfassend ein magnetisches Material und eine an dem magnetischen Material befestigte Spule, **dadurch gekennzeichnet, dass** es sich bei dem magnetischen Material um das Formteil aus weichmagnetischer Ferritharzzusammensetzung nach einem der Ansprüche 1 bis 6 handelt.

8. Berührungsloses Leistungszuführungsverfahren umfassend die Leistungsübertragungsvorrichtung, **dadurch gekennzeichnet, dass** dabei das berührungsloses Leistungszuführungssystem nach Anspruch 7 verwendet wird.

## Revendications

1. Produit moulé en composition de résine et ferrite magnétique douce pour un dispositif de transmission d'énergie pour un système de charge électrique sans contact comprenant une charge et un liant, laquelle charge comprend des particules de ferrite magnétique douce ayant une granulométrie moyenne de 5 à 35 µm, lequel liant comprend au moins un matériau choisi dans le groupe constitué par une résine thermoplastique et une résine de polyoléfine souple, et lequel produit moulé en composition de résine et ferrite magnétique douce a une masse volumique de moulage de 3,2 à 4,7 g/cm3 et une perméabilité magnétique de 5 à 15, **caractérisé en ce que** les particules de ferrite magnétique douce ont une masse volumique compressée de 2,5 à 5 g/cm3 et une surface spécifique de 0,3 à 4 m2/g.

2. Produit moulé en composition de résine et ferrite magnétique douce selon la revendication 1, dans lequel une inductance du produit moulé en composition de résine et ferrite magnétique douce est de 3,5 à 6 µH.

3. Produit moulé en composition de résine et ferrite magnétique douce selon la revendication 1 ou 2, dans lequel l'efficacité de transmission d'énergie du produit moulé en composition de résine et ferrite magnétique douce est de 55 à 80 %.

4. Produit moulé en composition de résine et ferrite magnétique douce selon l'une quelconque des revendications 1 à 3, dans lequel la charge comprend une ferrite de type spinelle.

5. Produit moulé en composition de résine et ferrite magnétique douce selon l'une quelconque des revendications 1 à 4, dans lequel le liant comprend au moins une résine thermoplastique choisie dans le groupe constitué par le nylon 6, le nylon 12, le nylon 612, le nylon 9T, le poly(sulfure de phénylène), un copolymère d'éthylène-acrylate d'éthyle, un copolymère séquencé de styrène-isoprène-styrène et un copolymère séquencé de styrène-éthylène/butylène-styrène, ou au moins une résine thermoplastique choisie dans le groupe constitué par un copolymère séquencé de styrène-isoprène-styrène et un copolymère séquencé de styrène-éthylène/ butylène-styrène et une résine de polyoléfine souple constituée d'un copolymère d'éthylène-butylène.

6. Produit moulé en composition de résine et ferrite magnétique douce selon l'une quelconque des revendications 1 à 5, dans lequel la teneur en les particules de ferrite magnétique douce dans le produit moulé en composition de résine et ferrite magnétique douce est de 88 à 97 % en poids.

7. Dispositif de transmission d'énergie comprenant un système de charge électrique sans contact comprenant un matériau magnétique et une bobine attachée au matériau magnétique, **caractérisé en ce que** le matériau magnétique est le produit moulé en composition de résine et ferrite magnétique douce selon l'une quelconque des revendications 1 à 6.

8. Procédé de charge électrique sans contact comprenant un dispositif de transmission d'énergie, **caractérisé en ce que** le système de charge électrique sans contact de la revendication 7 est utilisé.
